# EUROPÄISCHE PATENTSCHRIFT

(11) **EP 2 190 259 B1**
(45) Veröffentlichungstag und Bekanntmachung des Hinweises auf die Patenterteilung: **04.05.2016**
(21) Anmeldenummer: 09176547.9
(22) Anmeldetag: 19.11.2009
(51) Int. Cl.: H05B 3/68, A47J 36/02

(54) **Gargerät mit Mehrschichtmaterial-Wandung**
Cooking appliance with wall from multi-layered material
Ustensile de cuisine avec paroi en matérial multi-couches

(30) Priorität: 19.11.2008 FR 0806466
(43) Veröffentlichungstag der Anmeldung: 26.05.2010
(73) Patentinhaber: FRIMA International AG, 9435 Heerbrugg (CH); Rational AG, 86899 Landsberg/Lech (DE)
(72) Erfinder: Lingenheil, Markus, 79206, Breisach/Oberrimsingen (DE); Waßmus, Reinhard, 79395, Neuenburg am Rhein (DE); Wiedemann, Peter, 86836 Klosterlechfeld (DE)
(74) Vertreter: Weber-Bruls, Dorothée

(56) Entgegenhaltungen:
- EP-A- 0 197 905
- WO-A-2008/077836
- WO-A2-2006/136898
- FR-A- 2 859 867
- FR-A1- 2 534 187
- US-A- 2 057 254

## Beschreibung

Die vorliegende Erfindung betrifft ein Gargerät mit mindestens einer zumindest bereichsweise über mindestens ein Heizelement aufheizbaren Wandung, wobei jedes Heizelement eine Heizelementschicht in Form einer Dickschicht aufweist, die an die Wandung angebracht ist, die Wandung zumindest bereichsweise aus einem Mehrschichtmaterial ausgebildet ist, die von jeder Heizelementschicht flächig erzeugte Wärme sich flächig in dem Mehrschichtmaterial zur gleichmäßigen Erwärmung ausbreitet, und jedes Heizelement in direktem Kontakt mit dem Mehrschichtmaterial steht.

Solch ein Gargerät ist insbesondere aus der WO 2008/077836 A2 oder der WO 2005/032214 A2, samt Familienmitglieder FR 2 859 867 A1 sowie EP 1 671 520 B1 , bekannt.

Die EP 1 671 520 B1 offenbart den Einsatz einer Dickschichtheizung zur schnellen und effizienten Aufheizung in einem Gargerät.

Ferner sind Mehrschichtmaterialen für Gargeräte bekannt. So offenbaren die DE 44 15 409 A1 sowie die EP 0 197 905 A1 Frittiergeräte jeweils mit einer Wandung aus einem Zweischicht-Verbundmaterial. Die DE 601 14 251 T2 beschreibt ein Kochgefäß mit einem Boden aus mehrschichtigem Material. Das Mehrschichtmaterial soll in jedem Falle auf Grund eines horizontalen Wärmeflusses innerhalb der Schichten zu einer gleichmäßigen Aufwärmung führen. Die US 2,057,254 offenbart einen Kochtopf mit drei Schichten, wobei die Wärmeleitfähigkeit der mittleren Schicht am größten ist, sodass auch bei lokaler Wärmezufuhr über eine Flamme eine homogene Aufwärmung von Gargut im Kochtopf stattfindet. Damit sich die drei Schichten beim Aufwärmen mit Flammen nicht trenne, steigt die thermische Volumenausdehnung von der Flammenseite zur Kochseite des Kochtopfs an.

Aufgabe der vorliegenden Erfindung ist es, das gattungsgemäße Gargerät derart weiterzuentwickeln, dass bei einem einfachen Aufbau ein zumindest bereichsweise gleichmäßiges Aufheizen ermöglicht wird, und zwar schnell und effizient.

Diese Aufgabe wird nach der Erfindung durch die Merkmale des Kennzeichens von Anspruch 1 gelöst. Die Ansprüche 2 bis 6 beschreiben bevorzugte erfindungsgemäße Ausführungsformen. Der Erfindung liegt die überraschende Erkenntnis zugrunde, dass eine Kombination der positiven Eigenschaften eines Mehrschichtmaterials einerseits mit denen einer Dickschichtheizung andererseits zu einer optimalen Energieausnutzung, also einem hohen Wirkungsgrad und einer hohen Energieeffizienz, bei gleichzeitig einfachem Aufbau führt. Dabei sorgt die Kombination aus einer aufzuheizenden Wandung aus einem Mehrschichtmaterial und einer direkt darauf aufgebrachten Dickschichtheizung sowohl für ein schnelles Aufheizen sowie auch schnelles Abkühlen, was für ein exaktes Führen einer Vielzahl von Garverfahren notwendig ist, um reproduzierbare und qualitativ hochwertige Garergebnisse zu erhalten. Dabei muss selbst nicht die komplette aufzuheizende Fläche der Wandung, die aus einem Mehrschichtmaterial hergestellt ist, mit Dickschichtheizungen aufgeheizt werden, da es aufgrund des horizontalen Wärmeflusses innerhalb des Mehrschichtmaterials zu einer horizontalen Verteilung des Wärmeflusses kommt. Mit anderen Worten kann eine große Fläche einer Wandung, beispielsweise ein ganzer Tiegelboden eines unter dem Handelsnamen VarioCooking Center® seitens der Anmelderin vertriebenen Gargeräts durch individuell ansteuerbare bzw. regelbare Heizzonen festlegende Dickschichtheizungen gezielt aufgeheizt werden. Der Verzicht auf eine flächige Bestückung des Tiegelbodens mit Dickschichtheizungen ermöglicht wiederum eine Teil-Kompensation von unterschiedlichen Wärmeausdehnungskoeffizienten und auch den Einsatz an deformierten Wandungen, wie beispielsweise an einem nicht ebenen Tiegelboden. Wesentlich ist gemäß der Erfindung ferner, dass der Temperaturgradient im Mehrschichtmaterial, nämlich das Temperaturgefälle von der Heizseite, also der den Dickschichtheizungen zugewandten Seite, zur Nutzseite, also der einem im Gargerät zu garenden Gargut zugewandten Seite, durch eine Wärmeleitfähigkeitsabnahme und vorzugsweise auch eine Längenausdehnungskoeffizientenzunahme von der Heizseite zur Nutzseite zumindest teilweise kompensiert wird. Damit können die benötigte Heiztemperatur und insbesondere die mechanische Belastung auf die Dickschichtheizungen verringert werden. Dies führt zu Energieeinsparungen, längeren Lebenszeiten von Gargeräten und besseren Garergebnissen.

Erfindungsgemäß ist keine Ausgleichsschicht wie in Form einer Graphitschicht zwischen der Dickschichtheizung und der Mehrschichtmaterial-Wandung mehr notwendig, wie bislang im Stand der Technik üblich, siehe hierzu beispielsweise EP 1 671 520 B1. Dies vereinfacht den Aufbau und spart Kosten. Es sind aber auch andere Ausgleichsschichten denkbar.

Die Verwendung eines Mehrschichtmaterials für die Wandung des Gargeräts ermöglicht auch eine Reduzierung der Dicke der Wandung ohne Verlust eines gleichmäßigen Wärmeeintrags über die Wandung in einen Garraum, beispielsweise des Tiegels eines VarioCooking Centers®, oder in einen Wasserkessel, beispielsweise eines Dampfgenerators des unter dem Handelsnamen SelfCooking Center® vertriebenen Gargeräts zur Beaufschlagung von Gargut mit Heizluft und/oder Dampf.

Die Vorteile der erfindungsgemäßen Kombination von Dickschichtheizungen und Mehrschichtmaterialen sind höhere Dynamik durch verkürzte Aufheizzeiten sowie auch verkürzte Abkühlzeiten, vergleichmäßigte Wärmeübertragung durch bessere horizontale Wärmeverteilung und Energieeinsparung durch verbesserte Effizienz. Zudem führt die erfindungsgemäße Abstimmung der Wärmeleitfähigkeiten und vorzugsweise auch der Längenausdehnungskoeffzienten der Mehrschichtmaterialien vorteilhafterweise zu einer weiteren Energieeinsparung durch die Ermöglichung niedriger Heiztemperaturen und zur Steigung der Haltbarkeit von Gargeräten, da Verformungen und somit mechanische Belastungen reduziert werden.

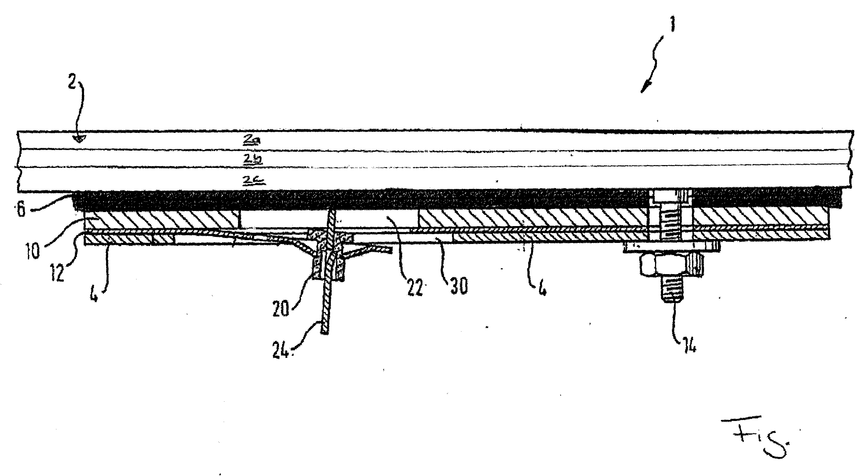

Weitere Merkmale und Vorteile der Erfindung ergeben sich aus der nachfolgenden Beschreibung, in der ein Ausführungsbeispiel der Erfindung anhand einer aus einer einzigen Figur bestehenden schematischen Zeichnung erläutert wird.

Die Figur zeigt dabei eine Teilschnittansicht durch ein erfindungsgemäßes Gargerät. Genauer gesagt zeigt die Figur einen Tiegel 1 mit seinem Tiegelboden 2, der aus einem Mehrschichtmaterial aufgebaut ist, und zwar aus drei Schichten. Dabei handelt es sich um eine erste Edelstahlschicht 2a mit einer ersten Wärmeleitfähigkeit λ₂ₐ und einem ersen Längenausdehnungskoeffizienten α₂ₐ, eine mittlere Aluminiumschicht 2b mit einer zweiten Wärmeleitfähigkeit λ_{2b} und einem zweiten Längenausdehnungskoeffizienten α_{2b} und eine zweite Edelstahlschicht 2c mit einer dritten Wärmeleitfähigkeit λ_{2c} und einem dritten Längenausdehnungskoeffizienten α_{2c}.

Direkt an das Mehrschichtmaterial des Tiegelbodens 2 ist über ein Pressplatte 4 eine Heizelementschicht 6 angepresst, also ohne Zwischenschaltung einer Ausgleichsschicht. Die Pressplatte 4 ist dabei über eine Schrauben-Mutter-Konstruktion 14 an dem Tiegelboden 2 angeschraubt, und zwar unter Zwischenschaltung einer Federelementplatte 12 und einer Glimmerplatte 10 als Pufferschicht. Die Federelementplatte 12 drückt federnd ein von der Federelementplatte 12 über eine Isolierhülse 20 getrenntes Kontaktelement 24 durch Auslassungen 22 und 30 in der Glimmerplatte 10 sowie der Pressplatte 4 auf die Heizelementschicht 6. Die Heizelementschicht 6 ist als eine Dickschicht in einem Druckprozess mit einer Vielzahl von Heizwiderständen ausgeführt, wie im Rahmen der EP 1 671 520 B1 beschrieben, so dass sich diesbezüglich hierauf bezogen wird. Ferner bilden die Heizelementschicht 6, die Glimmerplatte 10, die Federelementplatte 12 und die Pressplatte 4 zusammen ein Heizelement, das durch die Schrauben-Mutter-Konstruktion 14 zusammengehalten wird.

Der Tiegelboden 2 kann beispielsweise in einem VarioCooking Center® eingesetzt werden und würde dann beispielsweise über seinen kompletten Tiegelboden 2 aus dem Mehrschichtmaterial 2a, 2b, 2c hergestellt sein, an das zur Bereitstellung einer Vielzahl individuell einstellbarer Heizzonen eine Vielzahl von Heizelementen 4-12 anpressbar sind. Die Heizelementschichten 6 müssen dabei nicht den Tiegelboden 2 flächig abdecken, sondern es können zwischen zwei benachbarten Heizelementschichten 6 Spalten offen bleiben, da es aufgrund des horizontalen Wärmeflusses in den Schichten 2a bis 2c gewährleistet wird, dass eine flächig von der Dickschicht der Heizelementschicht 6 angelegte Wärme sich gleichmäßig in einer Zone verteilt.

Für viele Garverfahren ist das Einhalten genauer Vorgaben für ein Aufheizen sowie auch ein Abkühlen zwingend erforderlich, wobei eine schnelle Dynamik wünschenswert ist, also ein schnelles Reagieren auf einen Aufheiz- oder Abkühlbefehl. Dies wird durch die hohe Effizienz einer Dickschicht für die Heizelementschicht 6 auf einem Mehrschichtmaterial des Tiegelbodens 2 erfindungsgemäß gewährleistet. Grund hierfür sind die geringeren thermischen Massen der Dickschichtheizung im allgemeinen sowie des Mehrschichtmaterials gegenüber einem Vollmaterial z.B. aus Edelstahl.

Es werden also im besonderen Maße die herausragenden Eigenschaften von Dickschichtheizungen und Mehrschichtmaterialen in einem erfindungsgemäßen Tiegel 1 miteinander kombiniert. Diese Kombinationsmöglichkeit erlaubt eine sehr effiziente Wärmeerzeugung, -Übertragung und -Verteilung. Darüber hinaus können sehr kurze Aufheizzeiten zum schnellen Aufheizen realisiert werden, während sich Abkühlzeiten ebenfalls verringern.

Das sehr gute dynamische Verhalten von Dickschichtheizungen wird demgemäß in Verbindung mit der guten Wärmeleitfähigkeit eines Mehrschichtmaterials in nahezu optimaler Weise an eine Nutzkontaktfläche übertragen. Bei geeigneter Wahl einer Heizleistung, einer Nutzkontaktfläche, einer Nutzkontaktflächengeometrie und der Dicke des Mehrschichtmaterials lässt sich eine hohe Flexibilität eines erfindungsgemäßen Gargeräts erreichen, was insbesondere sowohl für einen Tiegel, einen Garraum und eine sonstige Garfläche als auch einen Dampfgenerator zu großen Vorteilen führt. Die zudem bekannte Formstabilität von Mehrschichtmaterialen gewährleistet eine lange Lebenszeit der erfindungsgemäßen Gargeräte.

Der erfindungsgemäße Tiegel 1 zeichnet sich aber vor allem auch dadurch aus, dass der Tatsache Rechnung getragen wird, dass sich von der Heizseite des Tiegelbodens 2, auf der sich die Heizelementschicht(en) 6 befinden, zur Nutzseite des Tiegelbodens 2, auf der ein nicht gezeigtes Gargut anordbar ist, ein Temperaturgradient in Form eines Temperaturgefälles ausbildet. Aufgrund des entsprechenden Temperaturunterschiedes zwischen der Heizseite und der Nutzseite würde sich bei gleicher Wahl der thermischen Parameter für die erste Schicht 2a und die dritte Schicht 2c, die beide als Edelstahlschichten ausgebildet sind, eine Verbiegung ausbilden, der entgegengewirkt werden kann, nämlich durch zweierlei Maßnahmen. So wird erfindungsgemäß vorgeschlagen, die Wärmeleitfähigkeiten von der Heizseite zur Nutzseite kleiner werden zu lassen. Mit anderen Worten wird gefordert, dass λ_{2c} ≥ λ_{2b} ≥ λ₂ₐ. Durch dieses Wärmeleitfähigkeitsgefälle kann der Temperaturgradient von der Heizseite zur Nutzseite verkleinert und somit auch die für ein bestimmtes Garverfahren benötigte Heiztemperatur gesenkt werden, was wiederum zu einer Reduzierung der Belastung der Heizelementschicht(en) 6 führt. Alternativ oder kumulativ hierzu können die Längenausdehnungskoeffizienten der Materialschichten so gewählt werden, dass sich der in dem Mehrschichtenmaterial ausbildende Temperaturgradient, gegebenenfalls unter Berücksichtigung der Wärmeleitfähigkeitsunterschiede, in keiner großen Längendifferenz auswirkt, was dadurch bewirkt wird, dass zumindest α₂ₐ > α_{2c}, vorzugsweise α₂ₐ > α_{2b} > α₂c. Damit kann der Mehrschichtmaterial-Tiegelboden 2 so ausbalanciert werden, dass sich auch bei hohen Temperaturen kaum Verformungen bilden, was zu einer weiteren Reduktion der Belastung, und der zwar der mechanischen Belastung, der Heizelementschicht (en) 6 führt.

Da die erste Schicht auf der Nutzseite die erste Edelstahlschicht 2a bildet, ist sie besonders hart und verschleißfest. Die dritte Schicht auf der Heizseite besteht ebenso aus einer Edelstahlschicht 2c, die jedoch zur Gewährleistung einer hohen Wärmefestigkeit und Zähigkeit sich in ihrem thermischen Parametern von der ersten Schicht unterscheidet.

Insgesamt ist somit festzuhalten, dass sich das Mehrschichtmaterial des Tiegelbodens 2 durch aufeinander abgestimmte thermische Parameter auszeichnet, die der weiteren Optimierung beim Wärmetransport dienen.

Die in der vorstehenden Beschreibung, in den Ansprüchen sowie in der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Gargerät (1) mit mindestens einer zumindest bereichsweise über mindestens ein Heizelement (4-12) aufheizbaren Wandung (2), wobei
jedes Heizelement (4-12) eine Heizelementschicht (6) in Form einer Dickschicht aufweist, die an die Wandung (2) angebracht ist,
die Wandung (2) zumindest bereichsweise aus einem Mehrschichtmaterial (2a, 2b, 2c) ausgebildet ist,
die von jeder Heizelementschicht (6) flächig erzeugte Wärme sich flächig in dem Mehrschichtmaterial (2a, 2b, 2c) zur gleichmäßigen Erwärmung ausbreitet, und jedes Heizelement (4-12) in direktem Kontakt mit dem Mehrschichtmaterial (2a, 2b, 2c) steht, **dadurch gekennzeichnet, dass**
das Mehrschichtmaterial (2a, 2b, 2c) drei Schichten umfasst, deren Wärmeleitfähigkeiten von der Heizseite der Wandung (2) zur gegenüberliegenden Nutzseite der Wandung (2) kleiner werden,
eine Vielzahl von Heizelementen (4-12) im Bereich des Mehrschichtmaterials (2a, 2b, 2c) an der Wandung (2) angebracht sind, das Mehrschichtmaterial (2a, 2b, 2c) flächig im Wesentlichen abdeckend und in direktem Kontakt mit dem Mehrschichtmaterial (2a, 2b, 2c), und
das Mehrschichtmaterial (2a, 2b, 2c) eine Dicke von 3 bis 12 mm aufweist.

2. Gargerät nach Anspruch 1, **dadurch gekennzeichnet, dass**
die Wandung (2) von einem Tiegel (1), insbesondere Tiegelboden (2), oder einer Garraumwand oder einer Wasserkesselwand eines Dampfgenerators des Gargeräts umfasst ist.

3. Gargerät nach Anspruch 1 oder 2, **dadurch gekennzeichnet, dass**
jedes Heizelement (4-12) lösbar an der Wandung (2) angebracht, insbesondere angepresst ist, vorzugsweise über eine Schraubverbindung (14), und/oder
jedes Heizelement (4-12) plattenförmig oder rohrförmig ausgebildet ist, und/oder
jedes Heizelement (4-12) mittels Serigraphie und/oder in einem Druckprozess und/oder in einem Plasmaverfahren mit einer Vielzahl von einzelnen Heizwiderständen herstellbar ist.

4. Gargerät nach einem der vorangehenden Ansprüche, **dadurch gekennzeichnet, dass**
das Mehrschichtmaterial (2a, 2b, 2c) zwei Edelstahlschichten (2a, 2c) und eine Schicht (2b) aus Aluminium, einer Aluminiumlegierung und/oder Kupfer umfasst, wobei die Aluminiumschicht (2b) zwischen den zwei Edelstahlschichten (2a, 2c) eingebettet ist, und/oder
die Schichten (2a, 2b, 2c) miteinander verlötet, verschweißt, verklebt oder molekular verbunden sind.

5. Gargerät nach einem der vorangehenden Ansprüche, **dadurch gekennzeichnet, dass**
der Längenausdehnungskoeffizient an der Nutzseite der Wandung (2) größer als der an der gegenüberliegenden Heizseite der Wandung (2) ist.

6. Gargerät nach einem der vorangehenden Ansprüche, **gekennzeichnet durch**
eine Steuer- und/oder Regeleinrichtung in Wirkverbindung mit jedem Heizelement (4-12) und/oder zumindest einem Sensor, vorzugsweise einem Sensor für jedes Heizelement.

## Claims

1. A cooking appliance (1) having at least one wall (2) which can be heated at least in some sections by at least one heating element (4-12), wherein
each heating element (4-12) has a heating element layer (6) in the form of a thick film which is applied to the wall (2),
the wall (2) is formed at least in some sections by a multi-layered material (2a, 2b, 2c), the heat produced extensively by each heating element layer (6) spreads extensively in the multi-layered material (2a, 2b, 2c) for even heating, and
each heating element (4-12) is in direct contact with the multi-layered material (2a, 2b, 2c), **characterized in that**
the multi-layered material (2a, 2b, 2c) comprises three layers, the heat conductivities of which decrease from the heating side of the wall (2) to the opposite usable side of the wall (2),
a plurality of heating elements (4-12) are attached onto the wall (2) in the region of the multi-layered material (2a, 2b, 2c), essentially covering the area of the surface of the multi-layered material (2a, 2b, 2c) and in direct contact with the multi-layered material (2a, 2b, 2c), and
the multi-layered material (2a, 2b, 2c) has a thickness of 3 to 12 mm.

2. The cooking appliance according to Claim 1, **characterized in that**
the wall (2) is comprised of a crucible (1), in particular a crucible base (2), or a cooking chamber wall or a boiler wall of a steam generator of the cooking appliance.

3. The cooking appliance according to Claim 1 or 2, **characterized in that**
each heating element (4-12) is attached removably onto the wall (2), in particular is pressed on, preferably by means of a screw connection (14), and/or each heating element (4-12) is designed to be plate-like or tubular and/or each heating element (4-12) can be produced by means of serigraphy and/or in a printing process and/or in a plasma process with a plurality of individual heating resistors.

4. The cooking appliance according to any one of the preceding claims, **characterized in that**
the multi-layered material (2a, 2b, 2c) comprises two stainless steel layers (2a, 2c) and a layer (2b) of aluminum, an aluminum alloy and/or copper, wherein the aluminum layer (2b) is embedded between the two stainless steel layers (2a, 2c), and/or
the layers (2a, 2b, 2c) are soldered together, welded, adhered or joined together molecularly.

5. The cooking appliance according to any one of the preceding claims, **characterized in that**
the coefficient of linear expansion on the usable side of the wall (2) is greater than that on the opposite heating side of the wall (2).

6. The cooking appliance according to any one of the preceding claims, **characterized by** a control and/or regulating device in operative connection with each heating element (4-12) and/or at least one sensor, preferably one sensor for each heating element.

## Revendications

1. Appareil de cuisson (1) ayant au moins une paroi (2) pouvant être chauffée au moins par endroits par l'intermédiaire d'au moins un élément chauffant (4-12), dans lequel chaque élément chauffant (12-4) a une couche d'élément chauffant (6) sous la forme d'une couche épaisse, qui est fixé sur la paroi (2),
la paroi (2) est formée au moins par endroits à partir d'un matériau multicouche (2a, 2b, 2c),
la chaleur générée par chaque élément chauffant (6) de grande étendue se propage de manière plat dans le matériau multicouche (2a, 2b, 2c) pour un réchauffement uniforme, et chaque élément chauffant (4-12) est en contact direct avec le matériau multicouche (2a, 2b, 2c), **caractérisé en ce que**
le matériau multicouche (2a, 2b, 2c) comprend trois couches, dont la conductivité thermique diminue à partir de la face chaude de la paroi (2) vers la face supérieure opposée de la paroi (2),
une multitude d'éléments chauffants (4-12) sont fixés sur la paroi (2) dans la région du matériau multicouche (2a, 2b, 2c), essentiellement en recouvrant le matériau multicouche (2a, 2b, 2c) de manière plat, et en contact direct avec le matériau multicouche (2a, 2b, 2c), et
le matériau multicouche (2a, 2b, 2c) a une épaisseur de 3 à 12 mm.

2. Appareil de cuisson selon la revendication 1, **caractérisé en ce que** la paroi (2) est compris d'un creuset (1), en particulier d'un fond de creuset (2), ou d'une paroi de chambre de cuisson ou d'une paroi de bouilloire d'un générateur de vapeur de l'appareil de cuisson.

3. Appareil de cuisson selon la revendication 1 ou 2, **caractérisé en ce que** chaque élément chauffant (4-12) est monté de façon amovible sur la paroi (2), en particulier pressé, de préférence par un raccord fileté (14), et/ou chaque élément chauffant (4-12) est réalisé en forme de plaque ou de tube, et/ou chaque élément chauffant (4-12) peut être préparé par sérigraphie et/ou au cours d'un processus d'impression et/ou dans un procédé au plasma avec une pluralité de résistances chauffantes individuelles.

4. Appareil de cuisson selon l'une quelconque des revendications précédentes, **caractérisé en ce que**
le matériau multicouche (2a, 2b, 2c) comprend deux couches d'acier inoxydable (2a, 2c) et une couche (2b) en aluminium, un alliage d'aluminium et/ou cuivre, dans lequel la couche d'aluminium (2b) est insérée entre les deux couches d'acier inoxydable (2a, 2c), et/ou
les couches (2a, 2b, 2c) sont brasées, soudées, collées ou sont liées au niveau moléculaire, les unes avec les autres.

5. Appareil de cuisson selon l'une quelconque des revendications précédentes, **caractérisé en ce que**
le coefficient de dilatation linéaire sur la face supérieure de la paroi (2) est supérieur à celui au niveau de la paroi (2) de la face chaude opposée.

6. Appareil de cuisson selon l'une quelconque des revendications précédentes, **caractérisé par** un dispositif de commande et/ou de régulation en liaison fonctionnelle avec chaque élément chauffant (4-12) et/ou au moins un capteur, de préférence un capteur pour chaque élément chauffant.
